## Europäisches Patentamt

## European Patent Office

## Office européen des brevets

(19)

(11) Publication number: **0 192 474**
A2

# EUROPEAN PATENT APPLICATION

(12)

(21) Application number: **86301179.7**

(22) Date of filing: **19.02.86**

(51) Int. Cl.⁴: **F 16 K 17/28**

(30) Priority: **22.02.85 NZ 211199**

(43) Date of publication of application:
**27.08.86 Bulletin 86/35**

(84) Designated Contracting States:
**AT BE CH DE FR GB IT LI LU NL SE**

(71) Applicant: **Quested, Raymond
60 Strathavon Road
Miramar Wellington(NZ)**

(72) Inventor: **Quested, Raymond
60 Strathavon Road
Miramar Wellington(NZ)**

(74) Representative: **Gillam, Francis Cyril et al,
Sanderson & Co. 97 High Street
Colchester Essex C01 1TH(GB)**

(54) A valve.

(57) A valve, 100, has a valve body, 101, with a recess 115 engaged by a movable threaded plug 116. A valve control member, 117 in the form of a ball is positioned on the projecting end 118 of the plug 116 so that its upper surface projects into the valve chamber 113 by a pre-determined amount. In its use with a vehicle fuel system, the valve 100 would have its outlet connector 103 connected to the vehicle engine and its inlet 114 connected to the fuel tank. In filling the fuel tank the ball 117 is unable to prevent the flow of the fuel, such as compressed natural gas. In the event of a rupture in a fuel line, excess flow of fuel from the fuel tank through the inlet 114 will create a fluid flow turbulence within the chamber 113, which turbulence is enhanced by the presence of a projection 152 extending into the chamber 113. The degree of exposure of the ball 117 within the chamber 113 is sufficient at that pre-determined rate of excess fluid flow for the turbulence to lift the ball 117 and position it against the ball seat 107 to prevent or limit further fuel flow. Automatic re-setting of the valve 100 can be achieved if the ball seat 107 permits some fuel flow to continue.

Other embodiments of the invention provide for the re-setting of the valve by manual re-setting or by provision of a specific by-pass path.

Fig. 2

- 1 -

0192474

A VALVE

BACKGROUND OF THE INVENTION

This invention relates to a valve and in particular to an excess-flow valve for use with fluid flow systems.

The term "fluid" as used hereinafter, relates both to gas and liquid systems, although the present invention may find particular application in respect of gas systems and particularly those using compressed natural gas (CNG).

The use of CNG as a vehicle fuel is becoming increasingly popular, some 300,000 vehicles in Italy, some 100,000 vehicles in the United States of America and some 100,000 vehicles in New Zealand being fitted with a CNG fuel supply system and in many cases as part of a dual-fuel supply system with gasoline being the other fuel.

Moreover, liquid petroleum gas is already established throughout the world as a vehicle fuel, there being large fleets of such vehicles in Japan, Europe and the United States of America and such LPG fuel systems are finding increasing popularity in New Zealand.

Apart from such CNG and LPG fuel systems in vehicles, CNG and LPG are, of course, both used in various other industrial and domestic situations and in many of those situations an excess flow-valve can be desirable and in many instances can be mandatory.

It will be appreciated that there are various situations where excess flow, once detected, needs to be prevented, for example, in the case of the rupture of a high pressure line, such as can occur in a vehicle accident, where the flow of fuel could continue to feed the fire if the fuel has ignited.

Another situation is where a vehicle drives off from a fuel supply installation with the hose still connected. A third situation occurs where articulated vehicles carry their own gas supply on a trailer and the fuel supply is needed to be cut off in the event that connection between the trailer and the vehicle is broken. A fourth situation can occur in any household or industrial situation where an excess flow cut-off valve is required for the household or factory.

Depending on the pressure of the fluid line, various types of excess flow cut-off valves have been proposed to the present time. In high pressure gas lines, for example, active pressure sensing devices and power operated valves would generally be used. In contrast, with low pressure gas lines, the valves would predominantly be spring-loaded valves where a pre-determined flow or pressure would overcome the spring bias to close the valve, or otherwise would typically include an electronic detection system.

However, due to the use of CNG as a vehicle fuel still being in its infancy, the applicant is not aware of any regulation having been introduced relating to the provision of excess flow cut-off valves for such systems. Such regulations do exist in respect of LPG Fuel systems. See, for example, Australian standard specifications AS1425-1982 (LP gas fuel systems for vehicle engines), AS1596-1983 (LP gas storage and handling) and the draft European standard specification ECESCl/WP29/GRPE/RED3 (LP containers accessories).

It is, of course, extremely important that the flow of fluid which results in the valve being shut off should never be less than a normal maximum flow, e.g., in the case of vehicle fuel system, should never be less than that required by the engine to run at full speed and load. The Australian specification AS1596 for an LPG system requires that "the closing flow rate of an excess-flow valve shall not exceed 1.5 times the maximum normal flow rate at that point." But, where such regulations do not exist, the flow rate at shut-off will need to be determined according to safety and practical requirements.

Various excess flow valves have been proposed in the past for various applications. Such prior proposals have included pressure release control devices such as that described in UK patent 1426588 (American Air Filter Company), where a spring loaded ball allows the flow of fluid through a port above a pre-determined pressure existing in a fluid flow line. Such control devices, and other ball valves relying on spring pressure, suffer from the inherent disadvantages of relying on a spring, particularly as the spring weakens over a period of time. Such disadvantages are overcome in flow actuated valves, such as described in the United States patent 3,861,415 Larsen) and French patent 2.180.885 (A/S Teknova). Both of these valves rely on a ball which is positioned within a chamber through which the fluid is flowing and which is moved against a port to block it off at a pre-selected flow rate. Such valves, relying on the actual flow of the fluids through the chamber to position the ball, have however been found to be lacking in sensitivity, i.e., they will tend to be actuated across a wide range of flow rates, particularly if the chamber is moved from the horizontal, and are also not able to be adjusted for different flow rate actuations, except insofar as a different weight of ball could be utilised.

The valve of French specification 2.180.885 would be particularly prone to premature shut-off due to vibration because it is totally free to move.

It is therefore, an object of the present invention to provide an excess flow cut-off valve, which is reliable and sensitive in operation and which overcomes, or at least obviates, the disadvantages in such valves available at the present time.

Further objects of the present invention will become apparent from the following description.

## SUMMARY OF THE INVENTION

According to one aspect of the present invention, there is thus provided a valve, having a valve body, a first port, having or being adapted to be provided with a valve seat, at least a second port adapted for connection with a source of pressurised fluid, a chamber positioned between said first and second port, and a control member, said valve characterized in said valve body including a recess containing a plug member, an end portion of said plug member being adapted to have positioned thereon or therein said control member to expose a pre-selected portion of said control member to fluid flow within said chamber, wherein the weight of said control member and its degree of exposure within said chamber is such that above a pre-determined rate of fluid flow through said chamber, said control member will be positioned against said valve seat to prevent or limit further fluid flow from said pressurized fluid source through said first port.

Further aspects of this invention which should be considered in all its novel aspects will become apparent from the following description given by way of example of possible embodiments of the invention and in which reference is made to the accompanying drawings.

## BRIEF DESCRIPTION OF THE DRAWINGS

Figure 1: is a diagrammatic cross-sectioned view of a valve according to one possible embodiment of the invention.

Figure 2: is a diagrammatic cross-sectioned view through a valve according to a further embodiment of the invention.

Figure 3: shows diagrammatically a view along arrows A - A of figure 2.

Figure 4: is a diagrammatic cross-sectioned view of a valve according to a further embodiment of the invention.

Figure 5: is a diagrammatic cross-sectioned view of an outlet connector, suitable for use with a valve according to an embodiment of the invention.

Figure 6: is a diagrammatic enlarged cross-sectioned view of the by-pass portion of the outlet connector of figure 5.

Figure 7: is an illustration of a typical CNG or LPG vehicle installation with an excess-flow valve of the present invention included.

## DETAILED DESCRIPTION OF ILLUSTRATED EMBODIMENTS

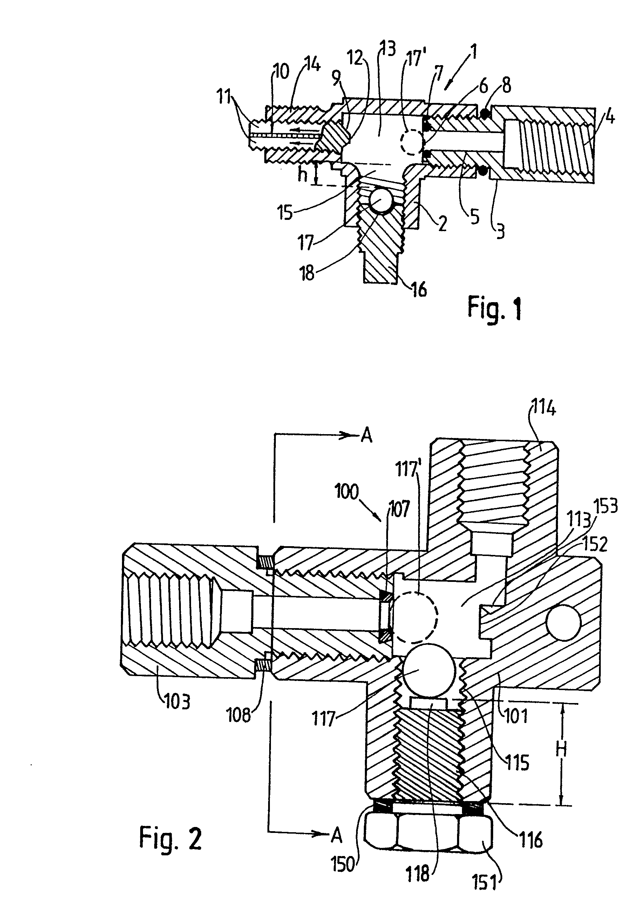

Referring firstly to figure 1 of the accompanying drawings, a valve according to one embodiment of the invention is referenced, generally, by arrow 1 and is seen to comprise a substantially T-shaped body 2.

The body 2 has fitted to it a fluid outlet connector 3 with threaded outlet port 4. A threaded projecting portion 5 is shown in threaded engagement with the body 2 and with a valve seat 6 at its inner end shown provided with a valve seal member 7. A seal or washer 8 is also shown positioned between an inner flange of the connector 3 and an outer face of the body 2.

In use, the threaded part 4 of the connector 3 would be connected with a suitable coupling connecting it with the fuel line to a vehicle engine or the like.

A second port 9 is shown with a threaded insert 10 having flutes or grooves 11 along its length and having an inner projecting tip 12 which extends into the valve chamber 13 provided within the valve body 2.

The external thread 14 will, in use, be connected with a suitable coupling which will connect the second port 9 with the pressurized fluid containing tank of the vehicle fuel system.

The lower part of the valve body 2 is shown provided with a threaded recess 15 closed off by a threaded plug 16, moveable to a desired position within the recess 15. A control member 17 shown in the form of a ball, is in this embodiment shown diagrammatically on top of the plug 16 at a suitable distance "h" below the level of the chamber 13. The top of the plug 16 is shown having an indentation 18 in which the ball 17 can sit. Alternative embodiments can provide the top of the plug 16 with an upstanding sleeve or the like in which the ball 17 could be accommodated with a snug fit.

In filling the tank connected with the second port 9, the valve 1 would have its port 4 connected with the supply of pressurized fluid which fluid would then flow through the connector 3 and the valve seat 6 and through the flutes or grooves 11 of the insert 10 into the tank. This fluid flow, depending on the flow rate and the size and weight of the ball 17, may tend to pick up the ball 17 from the position shown in full lines so that it becomes suspended within the chamber 13. However, the ball 17 during this suspension will be unable to prevent the fluid flow through the valve body 2 as the projecting tip 12 of the insert 10 will keep the ball 17 from blocking access of the fluid to the grooves or flutes 11.

However, in the event of a rupture occuring in the fuel line connected to the connector 3, the fluid flow would be in the reverse direction, i.e., from the tank to the engine and from the port 9 into the port 4. As the abnormal fluid flow enters the chamber 13, the projecting portion 12 causes turbulence which at a pre-determined level of flow creates an aerodynamic force which is sufficient to overcome the weight of the ball 17 and lift it up into the position shown in outline $17^1$ to block off or to substantially block off the valve seat 6.

Once the valve has shut off, the pressure behind the ball 17 will tend to contain the ball in the shut-off position, unless the seal provided by the sealing member 7 is allowing some by-pass of fluid therethrough, in which case once the rupture in the line has been remedied, the by-pass flow through the seal 7 will result in automatic resetting. It is essential that the material of the seal 7 is able to cope with continual cycling to low temperatures and give satisfactory sealing at low temperatures. It is to be appreciated in this regard that as the fluid expands as it passes into the chamber 13, a substantial drop in its temperature can occur and at high flow rate such temperature drop could be substantial. If the material for the seal 7 is nylon for example, then a by-pass of fluid through the seal is possible. However, if a material such as polytetrafluroethylene is used, then this would give a substantially 100% seal, so that re-setting of the valve after shut-off would have to be achieved either by manual re-setting, or by a further filling operation if applicable.

Regarding the drop in temperature within the valve chamber 13, it may also be desirable to include a moisture absorbing means within the fuel system so as to ensure that fuel is dry and so as to prevent icing occuring.

It will be noted that the disposition of the valve seat 6, the plug 16 and the insert 10 are inter-changeable so as to enable a variety of connections between the engine and the tank of the fuel system. However, as the valve 1 relies on gravity for the retention of the ball 17 in its valve-open position, it is essential that the valve body 2 has the plug 16 at the lower end of the placement of the valve body 2 and in tests it has been ascertained that the inclination of the valve body 2 from the vertical should, preferably, not exceed 15 degrees.

While the use of the valve 1 between the tank and engine of a vehicle has been specifically mentioned, it is to be appreciated that this is by way of example only. The valve 1 could equally be used in a trickle-fill installation where vehicles are filled unattended, or in a stationary installation.

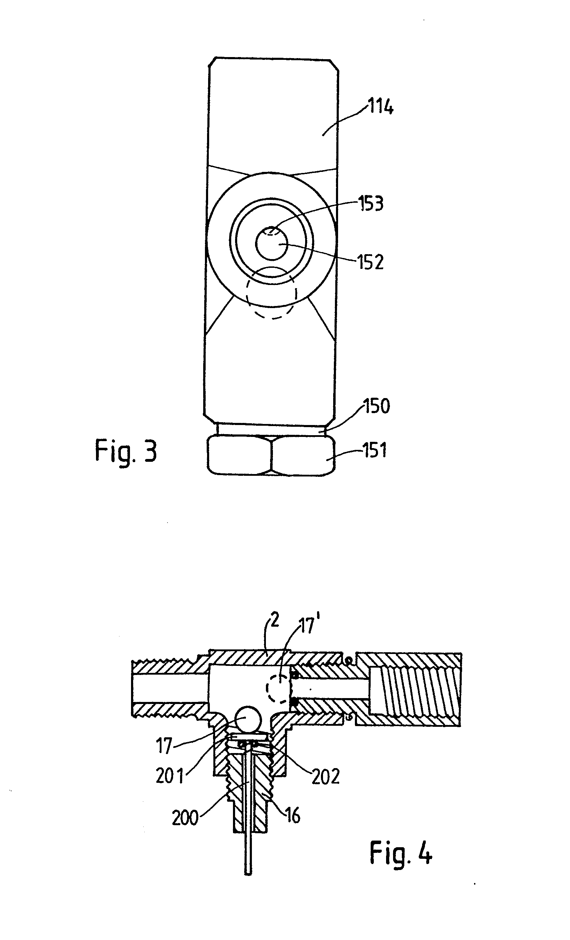

Referring now to figures 2 and 3 of the accompanying drawings, a further embodiment of the present invention is referenced 100 and has a valve body 101, with a recess 115 engaged by moveable threaded plug 116, a spacing washer 150 being provided between the end 151 of the plug 116 and the external face of the recess 115. The control member 117 is again shown as a ball shown positioned on a projecting end 118 of the plug 116. The outlet connector 103 for connecting the valve 100 to the engine is shown provided with a spacing washer 108 between its internal flange and an external face of the valve body 101. The inner face of the connector 103 is shown provided with a ball seat 107. The inlet 114 connected to the fuel tank is in this embodiment shown substantially orthoganol to outlet connector 103.

This arrangement facilitates the creation of turbulence within the valve chamber 113, particularly as a projection 152 is shown extending into the path of the fluid as it flows through the inlet connector 114 and into the chamber 113. A cut-away top portion 153 on, or adjacent to, projection 152 can also assist the creation of turbulence within the chamber 113 and also assist in ensuring a flow path around the ball 117 and through the inlet 114, as the fuel tank is being filled.

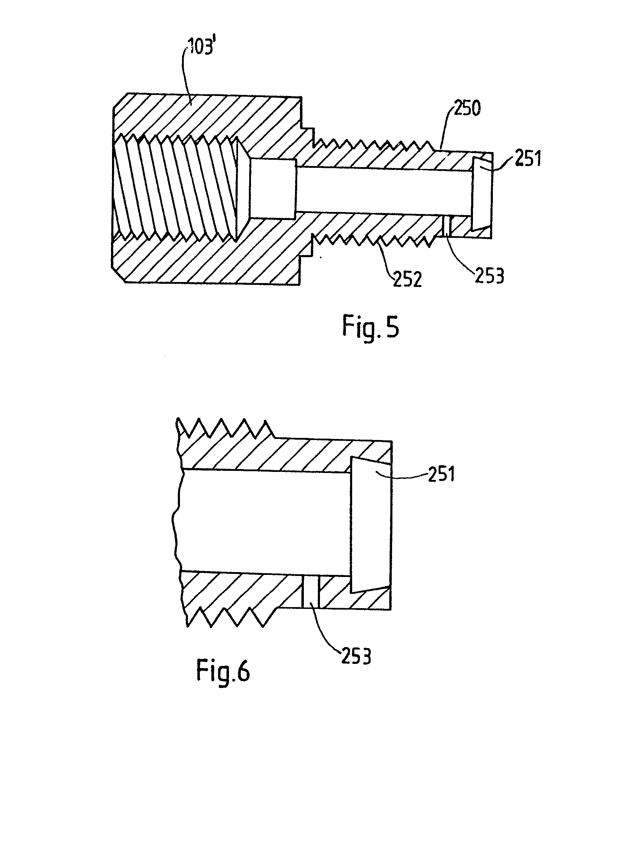

Again, depending on the materials selected for the seal 107, a manual re-setting of the valve once the ball 117 has moved into the position shown in outline 117¹, may be necessary if an actual by-pass path is not actually provided (see figure 6).

In tests with the valve shown in figures 2 and 3, the valve was able to be shut off automatically at an excess flow rate closely approximating a theoretical value of 1.5 times the normal maximum flow rate in a CNG fueled engine. These test results are as follows:

| ENGINE CAPACITY (cm3) | (in3) | THEORETICAL MAX.CLOSING FLOW (kg/sec) x 10(-3) | ACTUAL CLOSING FLOW (kg/sec) x 10(-3) | BALL SIZE (in) | PLUG HEIGHT (mm) (H) |
|---|---|---|---|---|---|
| 800 | 48.8 | 4.0 | 4.42 | 7/16 | 13.0 |
| 1000 | 61.0 | 5.0 | 5.07 | 5/16 | 11.0 |
| 1200 | 73.2 | 6.0 | 6.00 | 1/ 2 | 16.5 |
| 1300 | 79.3 | 6.5 | 6.85 | 7/16 | 16.0 |
| 1500 | 91.5 | 7.5 | 7.76 | 3/ 8 | 8.0 |
| 1800 | 109.8 | 9.0 | 10.74 | 7/16 | 13.0 |
| 2000 | 122.0 | 10.0 | 10.74 | 7/16 | 13.0 |
| 2300 | 140.3 | 11.5 | 11.53 | 1/ 2 | 13.5 |
| 2500 | 152.5 | 12.5 | 12.22 | 7/16 | 10.0 |
| 3000 | 183.0 | 15.0 | 13.90 | 3/ 8 | 12.5 |
| 3300 | 201.4 | 16.5 | 17.38 | 3/ 8 | 13.0 |
| 4100 | 250.2 | 20.5 | 21.80 | 7/16 | 3.5(*) |
| 5000 | 305.2 | 25.0 | 25.28 | 3/ 8 | 3.5(*) |

| BALL SIZE (in) | (mm) | BALL WEIGHT (grams) |
|---|---|---|
| 5/16 | 7.94 | 1.9502 |
| 3/8 | 9.53 | 3.5152 |
| 7/16 | 11.11 | 5.5762 |
| 1/2 | 12.70 | 8.2832 |

Note: (*) - Plug with 4.0 mm recess in the top

0192474

It is seen from these figures that, while a cut-off excess flow rate of 1.5 x the maximum flow rate is not mandatory for CNG fuels systems (at least at present in New Zealand), such a shut-off flow rate would be readily achieved for various sizes of engines, subject to some slight adjustment of ball size, ball weight and/or plug height.

It was mentioned earlier that an automatic re-setting of the valve can be achieved in the event that the ball seat does not provide a perfect seal. Rather than relying on an imperfect seal to provide this leakage of fluid past the ball and so an automatic re-setting, as shown in the embodiment of figure 4, a manual re-setting could instead be provided.

In this embodiment in which numerals corresponding to those used in figure 1 are again used where appropriate, the plug 16 has a plunger 200 extending therethrough, supporting, at its disc shaped upper end 201, the control member 17 in the form of a ball. After excess flow has occured and the ball 17 has moved to its shut-off position $17^1$, movement of the plunger 200, against the bias of the spring or the like 202, can engage the edge of the disc 201 with the ball 17 at its position $17^1$, so as to dislodge it and allow it to fall by gravity back to its valve open position. It is to be appreciated that the plunger 200 or like physical re-setting means does not need to extend through the plug 16, but instead could be inserted into the valve body 2 at any other suitable position.

As a further alternative, as shown in figures 5 and 6 in outlet connector $103^1$ suitable for use with valve 100 of figures 2 and 3 for example, a cutaway portion 250 is provided at inner end adjacent to the ball seat area 251. The threaded portion 252 of connector $103^1$, therefore terminates short of the extremity of the connector $103^1$.

As particularly seen in figure 6, a by-pass orifice 253 can then be provided so that even with the ball 117 in its valve shut-off position, shown in figure 2 in outline, an amount of fluid will still be able to flow through the outlet $103^1$.

It is to be appreciated that whether or not such an arrangement is desirable, is largely dependent on the situation in which the valve will be used. The decision to be made, of course, is whether the value of automatic re-setting of the valve outweighs the possible disadvantage of continued flow of fluid, albeit at a substantially reduced rate.

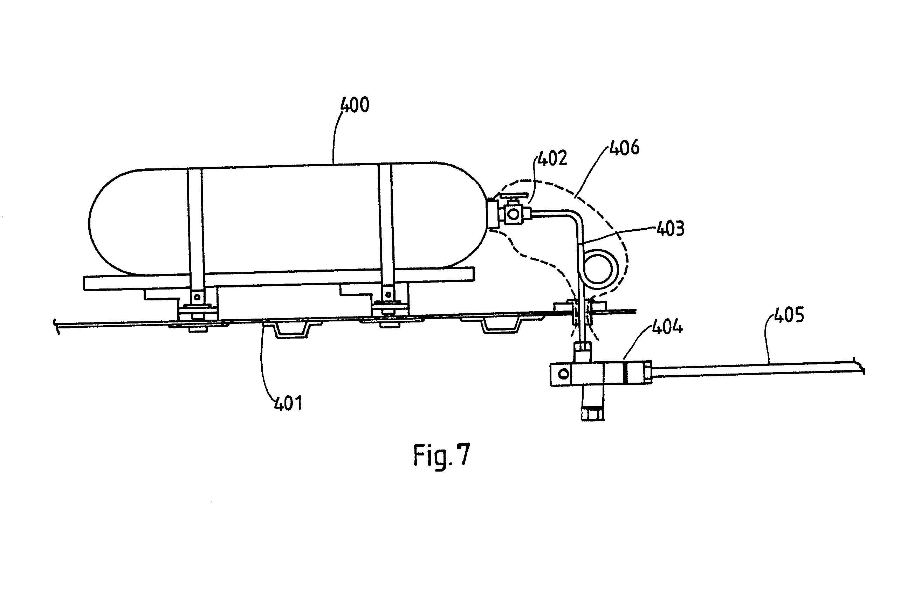

Referring now to figure 7, in a typical vehicle installation, a cylinder of CNG 400 is shown mounted on a vehicle floor panel 401. A main shut-off valve 402 connects the cylinder 400 via a high pressure pipe 403 to an excess flow shut-off valve 404 according to an embodiment of the invention. The valve 404 is mounted so as to be both transversely and longitudinally substantially vertical, preferably not more than approximately 15 degrees from the vertical. A high pressure pipe 405 will then connect the valve 404 with a pressure regulator in known manner. A bag 406 is shown covering over the assembly in the region of the main shut-off valve 402.

It is thus seen than the present invention provides an excess flow cut-off valve which, while being extremely simple (only having one moving part) is able to provide a reliable and selective operation, finding particular application in the control of fuel flow in a vehicle CNG system, but having possible applications wherever the control of excess fluid flow is to be achieved.

The vertical adjustment of the plugs 16, 116 means that the rate of fluid flow at which the turbulence will pick up the ball 17, 117 and close the valve can be readily changed. Furthermore, the size/weight of the balls 17,117 also provides for ready adjustment of that cut-off point. For some valves with a high volume flow rate, the use of a lightweight material, e.g., plastics for the ball may be necessary, instead of a heavier material such as metal.

Also, while a spherical ball control member 17, 117 has been shown it is envisaged that other shapes of control member may be useable, e.g., cylindrical..

Where in the foregoing description, reference has been made to specific components of the invention having known equivalents, then such equivalents are herein incorporated as if individually set forth.

Although this invention has been described by way of example and reference is made to possible embodiments thereof, it is to be understood that modifications or improvements may be made thereto without departing from the scope or spirit of the invention as defined in the appended claims.

I CLAIM

1.   A valve, having a valve body, a first port, having or being adapted to be provided with a valve seat, at least a second port adapted for connection with a source of pressurised fluid, a chamber positioned between said first and second port, and a control member, said valve characterized in said valve body including a recess containing a plug member, an end portion of said plug member being adapted to have positioned thereon or therein said control member to expose a pre-selected portion of said control member to fluid flow within said chamber, wherein the weight of said control member and its degree of exposure within said chamber is such that above a pre-determined rate of fluid flow through said chamber, said control member will be positioned against said valve seat to prevent or limit further fluid flow from said pressurized fluid source through said first port.

2.   A valve as claimed in claim 1 including at or adjacent to the connection of said second port with said chamber, a fluid flow turbulence creating means to enhance the amount of turbulence in the fluid within the chamber.

3.   A valve as claimed in claim 2 wherein said second port is positioned so as to be substantially orthoganol relative to said first port and said turbulence creating means comprises a projection extending into or towards said chamber adjacent to said second port.

4. A valve as claimed in claim 1 wherein said plug member is moveable within said recess to adjust the position of an upper portion of said control member relative to said chamber.

5. A valve as claimed in claim 1 wherein said valve seat permits a limited fluid flow therepast when said control member is positioned thereagainst.

6. A valve as claimed in claim 1 wherein a by-pass means extends about said valve seat so as to enable fluid flow therethrough when said control member is positioned against said valve seat.

7. A valve as claimed in claim 1 wherein a control member re-setting means is provided and adapted to be extendable into said valve chamber to engage with said control member when in position against said valve seat and to return said control member by gravity to its position within said recess.

8. A valve as claimed in claim 7 wherein said re-setting means comprises a plunger extendable through said plug.

Fig. 1

Fig. 2

0192474

1/4

Fig. 3

114
153
152
150
151

2   17'
17
201
200   16   202

Fig. 4

Fig.5

Fig.6

Fig. 7